# EUROPEAN PATENT APPLICATION

(11) **EP 4 516 565 A1**
(43) Date of publication of application: **05.03.2025**
(21) Application number: 23795835.0
(22) Date of filing: 03.02.2023
(51) Int. Cl.: B60L 15/20, A01B 63/112

(54) **ELECTRIC WORK VEHICLE**

(30) Priority: 28.04.2022 JP 2022074715; 28.04.2022 JP 2022074716
(71) Applicant: Kubota Corporation, Osaka 556-8601 (JP)
(72) Inventor: OKAZAKI Kazuto, Sakai-shi, Osaka 590-0908 (JP); KAWABATA Shinichi, Sakai-shi, Osaka 590-0908 (JP); TAKASE Shunya, Sakai-shi, Osaka 590-0908 (JP); INOUE Yuta, Sakai-shi, Osaka 590-0908 (JP); OBATA Norio, Sakai-shi, Osaka 590-0908 (JP)
(74) Representative: Müller-Boré & Partner Patentanwälte PartG mbB
(86) International application number: PCT/JP2023/003484
(87) International publication number: WO 2023/210087

(57) **Abstract**

An electric work vehicle includes: a motor (M) configured to drive at least either a travel device (10, 11) or a work device; a shift operation tool (38, 39) configured to shift a rotational power for driving the travel device (10, 11) or the work device; an accelerator operation tool (37) configured to raise and lower a motor rotation speed of the motor (M); and a motor controlling section (54) configured to control the motor rotation speed in response to an operation on the accelerator operation tool (37) and to perform a motor restraining control to restrict an output from the motor (M) in response to the shift operation tool (38, 39) and the accelerator operation tool (37) being operated in an inappropriate procedure with the motor rotation speed being equal to or less than a predetermined first rotation speed.

## Description

### Technical Field

The present invention relates to an electric work vehicle including a travel device driven by a motor.

### Background Art

As disclosed in Patent Literature 1, an electric tractor (an electric work vehicle) includes a travel device and a work vehicle both driven by a motor. The electric work vehicle such as an electric tractor includes various operation tools, and the motor or the like is controlled based on an operation on the various operation tools such that the electric work vehicle travels and works.

### Citation List

### Patent Literature

Patent Literature 1: Japanese Unexamined Patent Application Publication No. 2013-150560

### Summary of Invention

### Technical Problem

However, the motor can stand by at a rotation speed of 0 rpm, and when an operation is performed in a wrong procedure with the motor being at the rotation speed of 0 rpm, a body of the electric work vehicle may suddenly move or may not be able to start traveling or working appropriately.

An object of the present invention is to provide an electric work vehicle that can start traveling or working appropriately even while a motor is at a rotation speed of 0 rpm or rotates minutely.

### Solution to Problem

In order to achieve the above object, an electric work vehicle according to one aspect of the present invention includes: a motor configured to drive at least either a travel device or a work device; at least one shift operation tool configured to shift a rotational power for driving the travel device or the work device; an accelerator operation tool configured to raise and lower a motor rotation speed of the motor; and a motor controlling section configured to control the motor rotation speed in response to an operation on the accelerator operation tool and to perform a motor restraining control to restrict an output from the motor in response to the at least one shift operation tool and the accelerator operation tool being operated in an inappropriate procedure with the motor rotation speed being equal to or less than a predetermined first rotation speed.

At the time when a body is to be moved, when the shift operation tool and the accelerator operation tool are operated in an inappropriate procedure while the motor is in operation at a low rotation speed, the body might suddenly move due to an increase in the motor rotation speed of the motor. **In** the meantime, at the time when a work device is to be operated, when the shift operation tool and the accelerator operation tool are operated in an inappropriate procedure while the motor is in operation at a low rotation speed, the work device might suddenly work due to an increase in the motor rotation speed of the motor.

In the above configuration, an increase of the output from the motor is restricted by the motor restraining control. Accordingly, even when the shift operation tool and the accelerator operation tool are operated in an inappropriate procedure, it is possible to restrain the body from suddenly moving or the work device from suddenly working, so that travel or work can be started appropriately.

The motor restraining control may be a control to restrict an increase in the motor rotation speed.

With such a configuration, due to the motor restraining control, it is possible to restrict (restrain) an increase in the motor rotation speed and to easily and appropriately restrict an output from the motor, so that travel or work can be started appropriately.

The motor restraining control may be a control to restrict an increase in a torque of the motor.

With such a configuration, due to the motor restraining control, it is possible to restrict (restrain) an increase in the torque of the motor and to easily and appropriately restrict an output from the motor, so that travel or work can be started appropriately.

The motor controlling section may perform the motor restraining control in response to the accelerator operation tool being operated after the at least one shift operation tool is operated with the motor rotation speed being equal to or less than the first rotation speed.

When the shift operation tool is operated after the accelerator operation tool moderately raises the motor rotation speed, an increasing speed of the rotational power is relieved moderately by a power transmission mechanism configured to transmit power from the motor to the travel device or the work device. On the other hand, when the motor rotation speed is raised by the accelerator operation tool after the shift operation tool is operated, power is rapidly (directly) transmitted from the motor to the travel device or the work device, so that the body might suddenly move or the work device might suddenly work.

Accordingly, by performing the motor restraining control at the time when the accelerator operation tool is operated after the shift operation tool is operated, it is possible to restrain the body from suddenly moving or the work device from suddenly working, so that travel or work can be started appropriately.

The first rotation speed may be 0 rotations.

With such a configuration, it is possible to restrain the motor rotation speed from suddenly increasing from a state where the motor does not rotate, thereby restraining the body from suddenly moving or the work device from suddenly working.

The motor restraining control may be a control to restrain the motor rotation speed from increasing.

In such a configuration, an increase of the output from the motor is restricted more easily and appropriately. Accordingly, it is possible to restrain the body from suddenly moving or the work device from suddenly working, so that travel or work can be started appropriately.

The motor restraining control may be a control to set an upper limit allowable for the motor rotation speed to a predetermined idling rotation speed larger than 0 rotations.

In such a configuration, the upper limit of the motor rotation speed is restricted to the idling rotation speed at which the travel device and the work device barely work, so that an increase in the motor rotation speed is restrained. Accordingly, it is possible to restrain the body from suddenly moving or the work device from suddenly working, so that travel or work can be started appropriately.

In addition, the rotation speed of the motor increases moderately, and this allows an operator to recognize, by motor sound, that the motor is in operation. Accordingly, the operator can intentionally operate the shift operation tool and the accelerator operation tool in an appropriate procedure, so that travel or work can be started appropriately.

The motor restraining control may be a control to set the motor rotation speed to a predetermined second rotation speed larger than the first rotation speed, in response to the at least one shift operation tool being operated with the motor rotation speed being equal to or less than the first rotation speed.

**In** such a configuration, the motor rotation speed is set to the second rotation speed, so that the motor rotation speed is raised in advance. Accordingly, even when the accelerator operation tool is operated, it is possible to restrain the motor rotation speed from increasing rapidly. As a result, it is possible to restrain the body from suddenly moving or the work device from suddenly working, so that travel or work can be started appropriately.

Since the rotation speed of the motor increases moderately, the operator can recognize, by motor sound, that the motor is in operation. Accordingly, the operator can intentionally operate the shift operation tool and the accelerator operation tool in an appropriate procedure, so that travel or work can be started appropriately.

The motor restraining control may be a control to raise the motor rotation speed at a predetermined acceleration or less.

In such a configuration, a sudden increase in the output from the motor is restrained, and the output from the motor increases moderately. Accordingly, it is possible to restrain the body from suddenly moving or the work device from suddenly working, so that travel or work can be started appropriately.

The motor controlling section may stop the motor restraining control in response to the shift operation tool being restored.

When the shift operation tool is restored to a neutral position, for example, the travel device and the work device do not work. Accordingly, even when the motor restraining control is stopped, the body does not suddenly move or the work device does not suddenly work. When the shift operation tool and the accelerator operation tool are operated in an appropriate procedure in this state, travel or work can be started appropriately.

The motor controlling section may stop the motor restraining control in response to the shift operation tool being restored and the motor rotation speed becoming 0 rotations.

When the shift operation tool is restored to the neutral position, for example, and the motor rotation speed becomes 0 rotations, the travel device and the work device do not work. Accordingly, even when the motor restraining control is stopped, the body does not suddenly move or the work device does not suddenly work. When the shift operation tool and the accelerator operation tool are operated in an appropriate procedure in this state, travel or work can be started appropriately.

An electric work vehicle according to one aspect of the present invention includes: a motor configured to drive at least either a travel device or a work device; at least one shift operation tool configured to shift a rotational power for driving the travel device or the work device; an accelerator operation tool configured to raise and lower a motor rotation speed of the motor; and a motor controlling section configured to control the motor rotation speed in response to an operation on the accelerator operation tool, and the electric work vehicle is configured to perform predetermined notification while the motor is in operation.

At the time when a body is to be moved, when the motor is wrongly recognized to be stopped though the motor works at a low rotation speed, and the shift operation tool and the accelerator operation tool are operated in an inappropriate procedure, the body might suddenly move unintentionally due to an increase in the motor rotation speed. In the meantime, at the time when a work device is to be operated, when the motor is wrongly recognized to be stopped though the motor works at a low rotation speed, and the shift operation tool and the accelerator operation tool are operated in an inappropriate procedure, the work device might suddenly work unintentionally due to an increase in the motor rotation speed.

In the above configuration, the predetermined notification is performed while the motor is in operation. This allows an operator to recognize that the motor is in operation. This restrains the motor from being wrongly recognized to be stopped though the motor works at a low rotation speed, and the operator can intentionally operate the shift operation tool and the accelerator operation tool in an appropriate procedure. As a result, travel or work can be started appropriately.

The notification may be performed while the motor rotation speed is 0 rotations or equal to or less than a predetermined first rotation speed after the at least one shift operation tool is operated.

When the shift operation tool is operated after the accelerator operation tool moderately raises the motor rotation speed, an increasing speed of the rotational power is relieved moderately by a power transmission mechanism configured to transmit power from the motor to the travel device or the work device.

Accordingly, the notification is performed in a case where the motor rotation speed is 0 rotations or the motor barely rotates after the shift operation tool is operated, and hereby, the operator can recognize that the motor M is in operation. As a result, the operator can intentionally operate the shift operation tool and the accelerator operation tool in an appropriate procedure, so that travel or work can be started appropriately.

The motor controlling section may set the motor rotation speed equal to or less than a predetermined second rotation speed larger than the first rotation speed, in response to the at least one shift operation tool being operated with the motor rotation speed being equal to or less than the first rotation speed, and the notification may be performed by rotary sound of the motor.

**In** such a configuration, the motor rotation speed is set to the second rotation speed, so that the motor generates motor sound. Hereby, the operator can recognize, by motor sound, that the motor is in operation. Accordingly, the operator can intentionally operate the shift operation tool and the accelerator operation tool in an appropriate procedure, so that travel or work can be started appropriately.

The motor controlling section may control the motor rotation speed not to become larger than an idling rotation speed that is a predetermined rotation speed larger than 0 rounds while the motor is in operation, and the notification may be performed by rotary sound of the motor.

In such a configuration, the motor rotation speed is set equal to or less than the idling rotation speed at which the travel device and the work device barely work, so that motor sound is generated from the motor. Hereby, the operator can recognize, by motor sound, that the motor is in operation. Accordingly, the operator can intentionally operate the shift operation tool and the accelerator operation tool in an appropriate procedure, so that travel or work can be started appropriately.

The electric work vehicle may further include a notifier configured to perform the notification.

With such a configuration, the operator can recognize that the motor is in operation. Accordingly, the operator can intentionally operate the shift operation tool and the accelerator operation tool in an appropriate procedure, so that travel or work can be started appropriately.

The notifier may be a speaker configured to emit beep sound, and the notification may be performed by the beep sound.

With such a configuration, the operator can recognize, by the beep sound, that the motor is in operation. Accordingly, the operator can intentionally operate the shift operation tool and the accelerator operation tool in an appropriate procedure, so that travel or work can be started appropriately.

The notifier may be an alarm lamp, and the notification may be performed by lighting or flashing the alarm lamp.

With such a configuration, the operator can recognize, by the lighting or flashing of the alarm lamp, that the motor is in operation. Accordingly, the operator can intentionally operate the shift operation tool and the accelerator operation tool in an appropriate procedure, so that travel or work can be started appropriately.

The electric work vehicle may further include a hydrostatic continuously variable transmission configured to shift the rotational power to be transmitted from the motor to the travel device, and the at least one shift operation tool may include an HST operation tool configured to operate an angle of a cam plate of the hydrostatic continuously variable transmission.

With such a configuration, even in a case where the angle of the cam plate of the hydrostatic continuously variable transmission is not operated in an appropriate procedure, it is possible to restrain the body from suddenly moving and to cause the body to start traveling appropriately.

In a case where the HST operation tool configured to operate the angle of the cam plate of the hydrostatic continuously variable transmission is not operated in an appropriate procedure, the operator can recognize that the motor is in operation. Accordingly, the operator can intentionally operate the shift operation tool in an appropriate procedure, so that the body can start traveling appropriately.

The at least one shift operation tool may include a PTO operation tool configured to shift the rotational power to be transmitted from the motor to the work device.

With such a configuration, even in a case where the rotational power is not shifted in an appropriate procedure, it is possible to restrain the work device from suddenly working, so that the work device can start working appropriately.

In addition, in a case where the PTO operation tool configured to shift the rotational power is not operated in an appropriate procedure, the operator can recognize that the motor is in operation. Accordingly, the operator can intentionally operate the shift operation tool in an appropriate procedure, so that the work vehicle can start working appropriately.

### Brief Description of Drawings

FIG. 1 is a left side view of a tractor;
FIG. 2 is a left side view illustrating the arrangement of an inverter and so on;
FIG. 3 is a view illustrating the flow of power transmission;
FIG. 4 is a view illustrating the configuration of operation tools in a driving section;
FIG. 5 is a view illustrating a functional configuration to control a motor;
FIG. 6 is a view illustrating a processing flow of a motor restraining control in Embodiment 1;
FIG. 7 is a view illustrating an example of rotation speed transition that is the change of a motor rotation speed relative to a manipulated variable of an accelerator lever;
FIG. 8 is a view illustrating the flow of notification in Embodiment 2.

### Description of Embodiments

An embodiment to carry out the present invention will be described with reference to the drawings. Note that, in the following description, a direction of an arrow "F" in the drawings indicates "forward," a direction of an arrow "B" indicates "rearward," a direction of an arrow "L" indicates "left," and a direction of an arrow R indicates "right," unless otherwise specified. Further, in the drawings, a direction of an arrow "U" indicates "upward," and a direction of an arrow "D" indicates "downward."

### [Overall Configuration of Tractor]

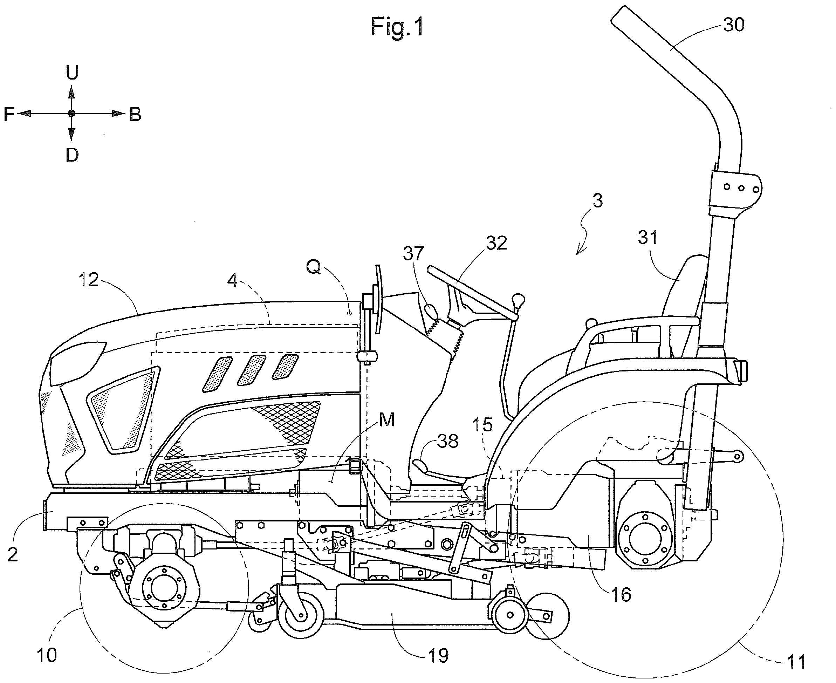

The following describes an electric tractor (hereinafter just referred to as a "tractor") as an electric work vehicle according to the present embodiment. As illustrated in FIG. 1, the tractor includes right and left front wheels 10, right and left rear wheels 11, and a cover member 12.

The tractor also includes a body frame 2 and a driving section 3. The body frame 2 is supported on the right and left front wheels 10 (corresponding to a "travel device") and the right and left rear wheels 11 (corresponding to a "travel device").

The cover member 12 is disposed in a front portion of a body. The driving section 3 is provided rearward of the cover member 12. In other words, the cover member 12 is disposed forward of the driving section 3.

The driving section 3 includes a protection frame 30, a driver seat 31, and a steering wheel 32. An operator can be seated on the driver seat 31. This allows the operator to get in the driving section 3. The right and left front wheels 10 are steered by an operation on the steering wheel 32. The operator can perform various driving operations in the driving section 3.

The tractor includes a drive battery 4. The cover member 12 is configured to be swingable around an opening-closing axis Q along the left-right direction of the body. Hereby, the cover member 12 is configured to be openable and closable. When the cover member 12 is closed, the drive battery 4 is covered with the cover member 12.

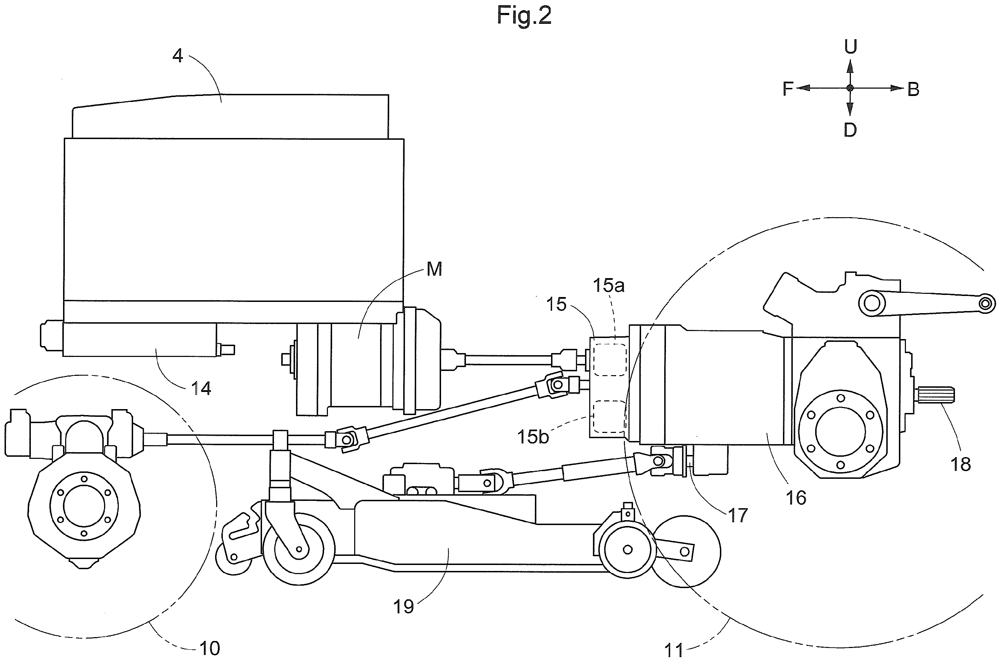

As illustrated in FIG. 2, the tractor includes an inverter 14 and a motor M (an electric machine). The drive battery 4 supplies electric power to the inverter 14. The inverter 14 converts direct-current power from the drive battery 4 into alternating-current power and supplies the alternating-current power to the motor M. The motor M is driven by the alternating-current power supplied from the inverter 14.

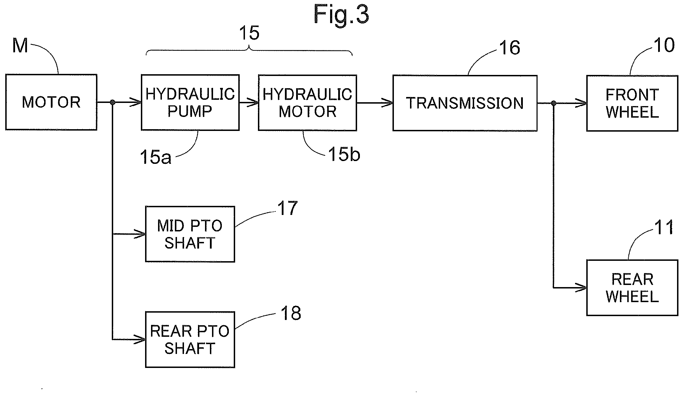

As illustrated in FIGS. 2, 3, the tractor includes a hydrostatic continuously variable transmission 15 and a transmission 16. As illustrated in FIG. 3, the hydrostatic continuously variable transmission 15 includes a hydraulic pump 15a and a hydraulic motor 15b.

The hydraulic pump 15a is driven by a rotational power from the motor M. When the hydraulic pump 15a is driven, a rotational power is output from the hydraulic motor 15b. Note that the hydrostatic continuously variable transmission 15 is configured to shift the rotational power between the hydraulic pump 15a and the hydraulic motor 15b. The hydrostatic continuously variable transmission 15 is also configured to continuously vary a gear ratio.

The rotational power output from the hydraulic motor 15b is transmitted to the transmission 16. The rotational power transmitted to the transmission 16 is shifted by a gear transmission mechanism of the transmission 16 and distributed to the right and left front wheels 10 and the right and left rear wheels 11. Hereby, the right and left front wheels 10 and the right and left rear wheels 11 are driven.

As illustrated in FIGS. 2, 3, the tractor also includes a mid PTO shaft 17 and a rear PTO shaft 18 (hereinafter just referred to as a "PTO shaft" collectively in some cases). The rotational power output from the motor M is distributed to the hydraulic pump 15a, the mid PTO shaft 17, the rear PTO shaft 18. Hereby, the mid PTO shaft 17 and the rear PTO shaft 18 rotate.

When a work device is connected to the mid PTO shaft 17 or the rear PTO shaft 18, the work device is driven by the rotational power from the mid PTO shaft 17 or the rear PTO shaft 18. For example, as illustrated in FIG. 2, in the present embodiment, a mowing device 19 is connected to the mid PTO shaft 17. The mowing device 19 is driven by the rotational power from the mid PTO shaft 17.

### [Operations of Travel and Work]

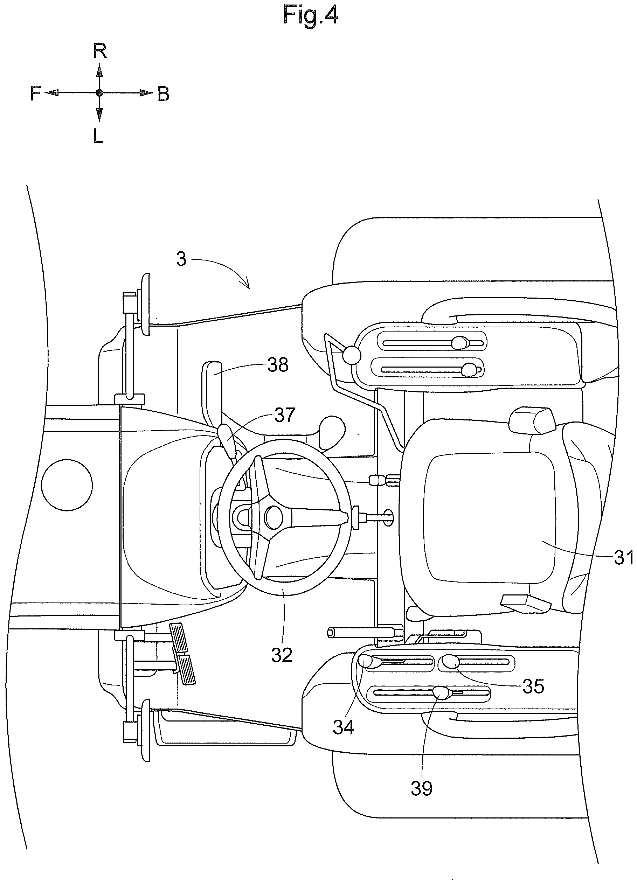

As illustrated in FIGS. 1, 4, the driving section 3 includes various operation tools for travel or work. For example, as the operation tools, a main shift lever 34, an auxiliary shift lever 35, an accelerator lever 37 (corresponding to an "accelerator operation tool"), an HST pedal 38 (corresponding to a "shift operation tool" or an "HST operation tool"), and a PTO lever 39 (corresponding to a "shift operation tool" or a "PTO operation tool") are provided. Note that these operation tools will be described as a lever or a pedal but may be operation tools in given forms.

The main shift lever 34 and the auxiliary shift lever 35 are provided on a left side of the driver seat 31 and are used for an operation to set a vehicle travel speed in forward movement and reverse movement. The accelerator lever 37 is provided on a right side of the steering wheel 32 and is used to operate raising and lowering of a rotation speed of the motor M. The PTO lever 39 is provided on the left side of the driver seat 31 and is used to shift the rotational power of the PTO shaft.

The HST pedal 38 is provided on a right front side of the driver seat 31, on the floor of the driving section 3. The HST pedal 38 is operated by the right foot of an operator seated on the driver seat 31 and is used to start forward movement and reverse movement and to adjust the vehicle travel speed. The vehicle travel speed in this case is limited within a vehicle travel speed set by the main shift lever 34 and the auxiliary shift lever 35. When the HST pedal 38 receives a shifting operation on a rotational power for driving the wheels (the front wheels 10 and the rear wheels 11), and the HST pedal 38 is tilted forward from a neutral position, the angle of a cam plate of the hydrostatic continuously variable transmission 15 is changed, so that the body advances. When the HST pedal 38 is tilted rearward from the neutral position, the angle of the cam plate of the hydrostatic continuously variable transmission 15 is changed, so that the body reverses. The HST pedal 38 can operate the vehicle travel speed depending on the amount of forward or rearward tilting.

At the time when the body travels, the main shift lever 34 and the auxiliary shift lever 35 are first operated with the motor M being in operation, so as to set a highest vehicle speed in forward movement or reverse movement. Subsequently, the accelerator lever 37 is operated such that the rotation speed of the motor M is adjusted to a rotation speed suitable for travel and work. Then, the HST pedal 38 is operated, so that the body starts to travel. When the body is operated in such a procedure, the hydrostatic continuously variable transmission 15 restrains the rotational power of the motor M from being suddenly transmitted to the wheels (the front wheels 10 and the rear wheels 11), thereby retraining the body from suddenly moving.

In a case where the power of the PTO shaft is adjusted at this time, the PTO lever 39 is operated after the accelerator lever 37 is operated to adjust the rotation speed of the motor M, so that a rotational power suitable for work is output to the PTO shaft. When the body is operated in such a procedure, the hydrostatic continuously variable transmission 15 restrains the rotational power of the motor M from being suddenly transmitted to a work device, thereby retraining the work device from suddenly working.

Here, in a case where the operator does not notice the motor M working, and the operation tools are not operated in the appropriate procedure as described above, the body may not be able to start to travel appropriately, or the work device may not be able to work appropriately. For example, when the accelerator lever 37 is operated after the HST pedal 38 is operated, the rotational power of the motor M is suddenly (directly) transmitted to the wheels (the front wheels 10 and the rear wheels 11), so that the body might suddenly move unintentionally. In the meantime, when the accelerator lever 37 is operated after the PTO lever 39 is operated, the rotational power of the motor M is suddenly (directly) transmitted to the work device, so that the work device might suddenly work unintentionally.

The following will describe embodiments to restrain such an inappropriate travel and work

### [Embodiment 1]

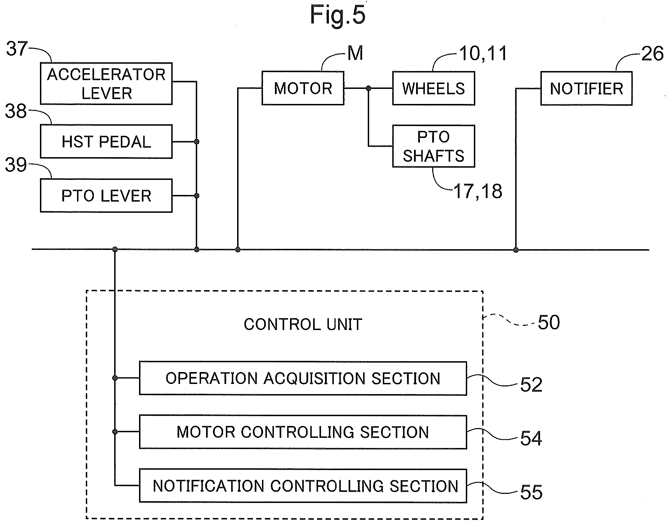

First described is a configuration to restrain inappropriate travel and work by controlling an output from the motor M based on FIGS. 5 to 7 with reference to FIGS. 3, 4.

The tractor according to Embodiment 1 performs a predetermined motor restraining control so as to restrain inappropriate travel and work. The control unit 50 controls the motor restraining control. The control unit 50 includes a processor such as a CPU or an ECU and works in response to a control performed by the processor.

The control unit 50 is connected to operation tools such as the main shift lever 34, the auxiliary shift lever 35, the accelerator lever 37, the HST pedal 38, and the PTO lever 39 and controls the motor M, the hydrostatic continuously variable transmission 15, and the transmission 16 based on respective operation states of these operation tools. The motor M drives the wheels (the front wheels 10 and the rear wheels 11) and the PTO shafts (the mid PTO shaft 17 and the rear PTO shaft 18), as described above. The control unit 50 may be connected to a notifier 26, and in this case, the control unit 50 causes the notifier 26 to perform predetermined notification.

The control unit 50 includes an operation acquisition section 52 and a motor controlling section 54. In a case where the notifier 26 is provided, the control unit 50 further includes a notification controlling section 55.

The operation acquisition section 52 acquires information on operations performed on the operation tools such as the main shift lever 34, the auxiliary shift lever 35, the accelerator lever 37, the HST pedal 38, and the PTO lever 39. More specifically, the operation acquisition section 52 acquires information on operation positions of the operation tools, or the like.

The motor controlling section 54 controls an output from the motor M such as a motor rotation speed or a torque of the motor M, based on the information on the operations performed on the operation tools which information is acquired by the operation acquisition section 52. In a case where the accelerator operation tool, the HST pedal 38, and the PTO lever 39 are operated in an inappropriate procedure, the motor controlling section 54 performs a control to restrict an increase in the output of the motor M as the predetermined motor restraining control. The notification controlling section 55 causes the notifier 26 to perform predetermined notification and notifies that the motor restraining control is performed, for example.

In such a configuration, at the time when work travel is started with the motor M being in operation, the main shift lever 34 and the auxiliary shift lever 35 are operated first. Subsequently, the accelerator lever 37 (the accelerator operation tool) is operated such that the motor rotation speed of the motor M is adjusted. As an appropriate procedure, the accelerator lever 37 (the accelerator operation tool) is operated, and after that, the HST pedal 38 and the PTO lever 39 (the shift operation tools) are operated to respective positions suitable for work travel.

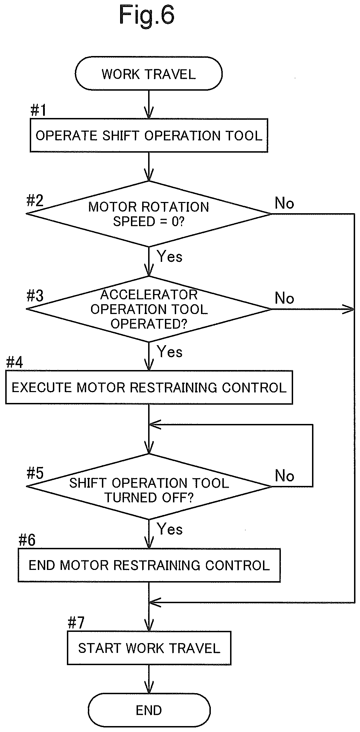

The following describes a step of performing the motor restraining control in a case where the operation tools are not operated appropriately. First, the accelerator lever 37 (the accelerator operation tool) is not operated, and the HST pedal 38 and the PTO lever 39 (the shift operation tools) are operated to respective positions suitable for work travel (step #1 in FIG. 6).

Then, the motor controlling section 54 determines whether or not the motor rotation speed is 0 rotations (0 rotations/m (rpm)) (step #2 in FIG. 6). That is, in an appropriate procedure, the accelerator lever 37 (the accelerator operation tool) is operated, and after that, the HST pedal 38 and the PTO lever 39 (the shift operation tools) are operated. In view of this, the motor controlling section 54 checks whether or not at least either the HST pedal 38 or the PTO lever 39 (the shift operation tool) is performed with the accelerator lever 37 (the accelerator operation tool) being not operated. In a case where the motor rotation speed is 0 rotations (Yes in step #2 in FIG. 6), the motor controlling section 54 checks whether or not the accelerator lever 37 (the accelerator operation tool) is operated (step #3 in FIG. 6). Hereby, the motor controlling section 54 checks whether or not the accelerator lever 37 (the accelerator operation tool) is operated (is operated in an inappropriate procedure) after the HST pedal 38 and the PTO lever 39 (the shift operation tools) are operated with the motor rotation speed being 0 rotations.

In a case where the accelerator lever 37 (the accelerator operation tool) is operated after the HST pedal 38 and the PTO lever 39 (the shift operation tools) are operated (Yes in step #3 in FIG. 6), the motor controlling section 54 restricts an increase in the motor rotation speed so as not to increase the motor rotation speed of the motor M from 0 rotations as the motor restraining control (step #4 in FIG. 6).

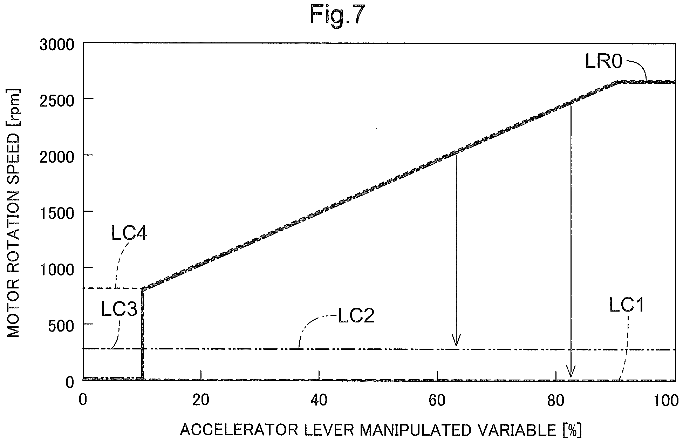

FIG. 7 is a view illustrating an example of rotation speed transition that is the change of the motor rotation speed relative to a manipulated variable of the accelerator lever 37. In a case where the operation tools are operated appropriately such that the HST pedal 38 and the PTO lever 39 (the shift operation tools) are operated after the accelerator lever 37 (the accelerator operation tool) is operated, the motor rotation speed changes in response to the manipulated variable of the accelerator lever 37 within an upper limit range corresponding to respective manipulated variables of the main shift lever 34 and the auxiliary shift lever 35, as indicated by a rotation speed transition LR0.

In contrast, in a case where the motor restraining control is performed, even when the accelerator lever 37 is operated as indicated by a rotation speed transition LC1, the motor rotation speed is maintained at 0 rotations and does not change.

Thus, due to the motor restraining control in the present embodiment, even when the accelerator lever 37 is operated, the motor rotation speed does not increase, so that the body does not move and the work device also does not work. This consequently restrains the body from suddenly moving or the work device from suddenly working, thereby promoting the operation tools to be operated in an appropriate procedure. When the operation is restarted in an appropriate procedure, travel or work can be started appropriately.

When a predetermined stop condition is satisfied while the motor restraining control is being performed (step #5 in FIG. 6), the motor controlling section 54 ends the motor restraining control (step #6 in FIG. 6). The stop condition is that the HST pedal 38 and the PTO lever 39 are turned off (restored to their neutral positions). Note that the stop condition may be that the HST pedal 38 and the PTO lever 39 are turned off, and the accelerator lever 37 is restored to the position of 0 rotations.

When the stop condition to end the motor restraining control is provided, the tractor is restored to a state where the tractor can receive an operation to cause the body to travel or to cause the work device to work, and when the operations are performed in an appropriate procedure after that, travel or work can be started appropriately.

After the motor restraining control is ended or in a case where the motor rotation speed is not 0 rotations (0 rotations/m (rpm)) (No in step #2 in FIG. 6), or in a case where the accelerator lever 37 (the accelerator operation tool) is not operated after the HST pedal 38 and the PTO lever 39 (the shift operation tools) are operated (No in step #3 in FIG. 6), the motor controlling section 54 controls the motor M in response to the operation on the accelerator lever 37, the HST pedal 38, the PTO lever 39, and so on, in such a manner as to start work travel (step #7 in FIG. 6).

### [Alternative Embodiment of Embodiment 1]

(1) The rotation speed of the motor M at the time when the motor retraining control is performed is not limited to 0 rotations, and the motor restraining control may be performed in a case where the operation tools are operated in a predetermined (inappropriate) procedure with the rotation speed of the motor M being equal to or less than a predetermined first rotation speed. The motor restraining control may be also performed in a case where it is not checked whether or not the rotation speed of the motor M is equal to or less than the predetermined first rotation speed or 0 rotations, and the accelerator lever 37 (the accelerator operation tool) is operated after the HST pedal 38 and the PTO lever 39 (the shift operation tools) are operated.
   Hereby, the motor restraining control is performed appropriately in a situation that requires the motor restraining control. This consequently restrains the body from suddenly moving or the work device from suddenly working, so that travel or work can be started appropriately.
(2) The motor restraining control is not limited to restraining an increase in the motor rotation speed and may be a control to restrain an increase in the torque of the motor M. The motor restraining control is not limited to a control on the motor rotation speed or the torque of the motor M and may be an output restriction control to restrict an increase in the output from the motor M by a given method.
   With such a configuration, it is possible to restrict (restrain) an increase in the rotational power of the motor M to be transmitted to the wheels (the front wheels 10 or the rear wheels 11) or the work device appropriately depending on the situation. This consequently restrains the body from suddenly moving or the work device from suddenly working, so that travel or work can be started appropriately.
(3) The motor restraining control is not limited to restraining an increase in the motor rotation speed, and the motor restraining control may control the motor rotation speed not to become larger than a predetermined idling rotation speed larger than 0 rotations even when the accelerator lever 37 is operated. That is, as indicated by a rotation speed transition LC2 in FIG. 7, even when the HST pedal 38 or the PTO lever 39 (the shift operation tool) is operated while the motor rotation speed is 0 rotations or very small (equal to or less than the predetermined first rotation speed), the motor controlling section 54 controls the motor rotation speed not to become larger than the idling rotation speed. The idling rotation speed is a motor rotation speed at which the body does not move and the work device cannot work, or a motor rotation speed at which the body travels only at a very low speed and the work device also barely works. More specifically, the idling rotation speed is 300 rotations/m (rpm) or more but 900 rotations/m (rpm) or less and is, for example, 600 rotations/m (600 rpm) that is slightly lower than a motor rotation speed at which the body substantially starts traveling.
   Hereby, even when the accelerator lever 37 is operated, the motor rotation speed does not become larger than the idling rotation speed. This consequently restrains the body from suddenly moving or the work device from suddenly working, so that travel or work can be started appropriately. Besides, when the motor M reaches the idling rotation speed, the operator can notice, by rotary sound of the motor M, that the motor M is in operation. This allows the operator to recognize that the motor M is in operation and to intentionally move the body or operate the work device in an appropriate procedure. This consequently allows the operations to be performed in an appropriate procedure and restrains the body from suddenly moving or the work device from suddenly working, so that travel or work can be started appropriately.
(4) The motor restraining control is not limited to restraining an increase in the motor rotation speed, and when the accelerator lever 37 is not operated, the motor restraining control may control the motor rotation speed to a predetermined rotation speed in a motor rotation speed range in which the body does not suddenly move or the work device does not suddenly work. For example, the motor restraining control may be performed such that, when the accelerator lever 37 is not operated, the motor rotation speed is set to a predetermined second rotation speed larger than the first rotation speed, and when the accelerator lever 37 is operated, the motor rotation speed may be raised from the second rotation speed in response to the manipulated variable of the accelerator lever 37. The second rotation speed is a motor rotation speed at which the body does not move and the work device cannot work, or a motor rotation speed at which the body travels only at a very low speed and the work device barely works. More specifically, the second rotation speed is 300 rotations/m (rpm) or more but 900 rotations/m (rpm) or less and is, for example, 600 rotations/m (600 rpm) that is slightly lower than a motor rotation speed at which the body substantially starts traveling. That is, as indicated by a rotation speed transition LC3 in FIG. 7, when the HST pedal 38 or the PTO lever 39 (the shift operation tool) is operated while the motor rotation speed is 0 rotations or very small (equal to or less than the predetermined first rotation speed), the motor controlling section 54 raises the motor rotation speed to the second rotation speed regardless of the operation position of the accelerator lever 37. After that, when the accelerator lever 37 is operated, the motor rotation speed is changed from the second rotation speed in response to the operation on the accelerator lever 37.
   Hereby, the motor rotation speed is raised in advance with the HST pedal 38 or the PTO lever 39 (shift operation tool) being operated, and therefore, even when the accelerator lever 37 (the accelerator operation tool) is operated, it is possible to restrain the motor rotation speed from increasing rapidly. This consequently restrains the body from suddenly moving or the work device from suddenly working, so that travel or work can be started appropriately. When the motor M maintains the second rotation speed, the operator can notice, by rotary sound of the motor M, that the motor M is in operation. This allows the operator to recognize that the motor M is in operation and to intentionally move the body or operate the work device in an appropriate procedure. This consequently restrains the body from suddenly moving or the work device from suddenly working, so that travel or work can be started appropriately.
(5) The motor restraining control may be performed to raise the motor rotation speed at a predetermined acceleration or less. That is, in a case where the accelerator lever 37 (the accelerator operation tool) is operated after the HST pedal 38 or the PTO lever 39 (the shift operation tool) is operated, the motor restraining control is performed to moderately raise the motor rotation speed at the predetermined acceleration or less. This consequently restrains the motor rotation speed from suddenly increasing and also restrains the body from suddenly moving or the work device from suddenly working, so that travel or work can be started appropriately.
(6) The tractor may not include the notifier 26. Hereby, the tractor can be achieved with a simpler configuration.

### [Embodiment 2]

Next will be described, as Embodiment 2, a configuration in which, when the motor M is in operation, inappropriate travel and work is restrained by notifying that the motor M is in operation, based on FIGS. 5, 7, 8 with reference to FIGS. 3, 4.

In order to restrain inappropriate travel and work, a tractor according to Embodiment 2 notifies that the motor M is in operation, while the motor M is in operation. Due to this notification, the operator recognizes that the motor M is in operation, so that the operator can intentionally cause the body to travel or the work device to work in an appropriate procedure. This consequently allows the operations to be performed in an appropriate procedure and restrains the body from suddenly moving or the work device from suddenly working, so that travel or work can be started appropriately.

At the time when the tractor according to Embodiment 2 starts work travel with the motor M being in operation, the main shift lever 34 and the auxiliary shift lever 35 are operated first. Then, the accelerator lever 37 (the accelerator operation tool) is operated such that the motor rotation speed of the motor M is adjusted. As an appropriate procedure, after the accelerator lever 37 (the accelerator operation tool) is operated, at least either the HST pedal 38 or the PTO lever 39 (the shift operation tool) is operated to a position suitable for work travel.

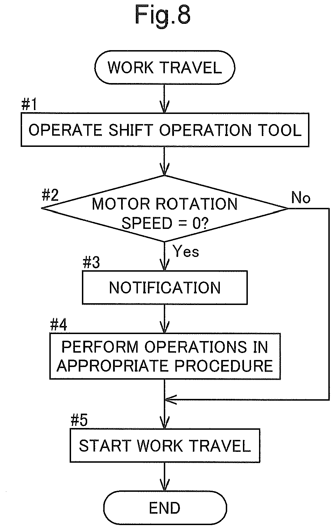

The following describes a control performed by the tractor in a case where the operations are performed in an inappropriate procedure. First, the accelerator lever 37 (the accelerator operation tool) is not operated, and the HST pedal 38 and the PTO lever 39 (the shift operation tools) are operated to respective positions suitable for work travel (step #1 in FIG. 8).

Then, the motor controlling section 54 determines whether or not the motor rotation speed is 0 rotations (0 rotations/m (rpm)) (step #2 in FIG. 8). That is, in an appropriate procedure, the accelerator lever 37 (the accelerator operation tool) is operated, and after that, the HST pedal 38 and the PTO lever 39 (the shift operation tools) are operated. In view of this, the motor controlling section 54 checks whether or not at least either the HST pedal 38 or the PTO lever 39 (the shift operation tool) is performed with the accelerator lever 37 (the accelerator operation tool) being not operated.

In a case where the motor rotation speed is 0 rotations (Yes in step #2 in FIG. 8), the notification controlling section 55 causes the notifier 26 to notify that the motor M is in operation (step #3 in FIG. 8).

Then, the operator who recognizes that the motor M is in operation changes the HST pedal 38 and the PTO lever 39 (the shift operation tools) to an OFF state (a neutral state) and operates the accelerator lever 37 (the accelerator operation tool), and after that, the operator operates at least either the HST pedal 38 or the PTO lever 39 (the shift operation tools) (step #4 in FIG. 8). Hereby, work travel is subsequently started in response to the operation on the operation tool (step #5 in FIG. 8). Note that appropriate work travel is also performed in a case where the motor rotation speed is not 0 rotations (0 rotations/m (rpm)) (the motor rotation speed increases) (No in step #2 in FIG. 8).

In such a configuration, the operator recognizes that the motor M is in operation, so that the operator can intentionally cause the body to travel or operate the work device in an appropriate procedure. This consequently allows the operations to be performed in an appropriate procedure and restrains the body from suddenly moving or the work device from suddenly working, so that travel or work can be started appropriately.

### [Alternative Embodiment of Embodiment 2]

(1) The notification to notify that the motor M is in operation may be performed in a case where the rotation speed of the motor M is equal to or less than the predetermined first rotation speed after at least either the HST pedal 38 or the PTO lever 39 (the shift operation tool) is operated, as well as the case where the rotation speed of the motor M is 0 rotations.
   Hereby, the notification is performed appropriately in a state where the operator should recognize that the motor M is in operation, so that the operator can accurately recognize that the motor M is in operation. As a result, the operator performs the operation in an appropriate procedure, thereby restraining the body from suddenly moving or the work device from suddenly working, so that travel or work can be started appropriately.
(2) The notification is performed not only in a case where the motor rotation speed is not limited to 0 rotations (equal to or less than the first rotation speed) at the time when at least either the HST pedal 38 or the PTO lever 39 is operated. While the motor rotation speed is 0 rotations or equal to or less than the first rotation speed after the motor M is started, the notification controlling section 55 may cause the notifier 26 to notify that the motor M is in operation. In this case, the notification controlling section 55 may end the notification in response to the accelerator lever 37 (the accelerator operation tool) being operated.
   This more accurately restrains at least either the HST pedal 38 or the PTO lever 39 (the shift operation tool) from being operated with the accelerator lever 37 (the accelerator operation tool) being not operated. As a result, the operator performs the operations in an appropriate procedure, thereby restraining the body from suddenly moving or the work device from suddenly working, so that travel or work can be started appropriately.
(3) Together with or separately from with each of the above embodiments, the tractor may maintain the motor rotation speed to be equal to or more than an idling rotation speed that is a predetermined rotation speed at least larger than 0 rotations while the motor M is in operation (LC4 in FIG. 7). Due to motor sound of the motor M working at the idling rotation speed, the operator can recognize that the motor M is in operation. As a result, the operator performs the operations in an appropriate procedure, thereby restraining the body from suddenly moving or the work device from suddenly working, so that travel or work can be started appropriately.
(4) At the time when the motor restraining control in Embodiment 1 is performed, the notification controlling section 55 may cause the notifier 26 to notify at least either that the motor restraining control is to be performed or that the motor M is in operation. This allows the operator to more accurately recognize that the motor M is in operation. As a result, the operator performs the operations in an appropriate procedure, thereby restraining the body from suddenly moving or the work device from suddenly working, so that travel or work can be started appropriately.

### [Alternative Embodiments]

(1) In each of the above embodiments, the shift operation tool is not limited to the HST pedal 38 and the PTO lever 39 and may be a given operation tool for shifting the rotational power or may be a given combination of given operation tools. The accelerator operation tool is not limited to the accelerator lever 37 and may be a given operation tool for raising and lowering the motor rotation speed of the motor M or may be a given combination of given operation tools. At the time when at least one shift operation tool and at least one accelerator operation tool are operated in an inappropriate procedure, at least either the motor restraining control or predetermined notification is performed.
   Hereby, at least either the motor restraining control or the predetermined notification can be performed depending on the configuration of the tractor, and travel or work can be started appropriately.
(2) In each of the above embodiments, a given notifier can be used as the notifier 26, provided that the notifier is configured to perform notification to the operator. For example, the notifier 26 may be a speaker or a voice alarm generator that can generate voice or beep sound, an LED, a lamp, or an alarm lamp that can perform notification by means of a lighting or flashing pattern, a monitor or an information terminal that can display a character or an image, or the like, or a combination thereof. Hereby, the notification easily noticed by the operator can be performed depending on the situation.
(3) In each of the above embodiments, the travel device is not limited to a wheel and may be a crawler.
(4) In each of the above embodiments, the control unit 50 is not limited to a unit constituted by the aforementioned functional blocks but may be constituted by given functional blocks. For example, each of the function blocks of the control unit 50 may be further subdivided, or some or all of the function blocks may be integrated. The functions of the control unit 50 are not limited to the above functional blocks and may be implemented by a method performed by a given functional block. Some or all of the functions of the control unit 50 may constituted by software. A program for the software is stored in a given storage device and is performed by a processor such as the CPU included in the control unit 50 or a processor provided separately.

### Industrial Applicability

The present invention is applicable to electrically-driven farm work vehicles such as a harvester and a rice transplanter, including a tractor, and various electric work vehicles that are electrically driven to travel and perform various works.

### Description of Reference Numerals

10: front wheel (travel device)
11: rear wheel (travel device)
15: hydrostatic continuously variable transmission
26: notifier
37: accelerator lever (accelerator operation tool)
38: HST pedal (HST operation tool, shift operation tool)
39: PTO lever (PTO operation tool, shift operation tool)
54: motor controlling section
M: motor

## Claims

1. An electric work vehicle, comprising:
a motor configured to drive at least either a travel device or a work device;
at least one shift operation tool configured to shift a rotational power for driving the travel device or the work device;
an accelerator operation tool configured to raise and lower a motor rotation speed of the motor; and
a motor controlling section configured to control the motor rotation speed in response to an operation on the accelerator operation tool and to perform a motor restraining control to restrict an output from the motor in response to the at least one shift operation tool and the accelerator operation tool being operated in an inappropriate procedure with the motor rotation speed being equal to or less than a predetermined first rotation speed.

2. The electric work vehicle according to claim 1, wherein
the motor restraining control is a control to restrict an increase in the motor rotation speed.

3. The electric work vehicle according to claim 1, wherein
the motor restraining control is a control to restrict an increase in a torque of the motor.

4. The electric work vehicle according to any one of claims 1 to 3, wherein
the motor controlling section performs the motor restraining control in response to the accelerator operation tool being operated after the at least one shift operation tool is operated with the motor rotation speed being equal to or less than the first rotation speed.

5. The electric work vehicle according to claim 4, wherein
the first rotation speed is 0 rotations.

6. The electric work vehicle according to claim 4 or 5, wherein
the motor restraining control is a control to restrain the motor rotation speed from increasing.

7. The electric work vehicle according to claim 4 or 5, wherein
the motor restraining control is a control to set an upper limit allowable for the motor rotation speed to a predetermined idling rotation speed larger than 0 rotations.

8. The electric work vehicle according to claim 4 or 5, wherein
the motor restraining control is a control to set the motor rotation speed to a predetermined second rotation speed larger than the first rotation speed, in response to the at least one shift operation tool being operated with the motor rotation speed being equal to or less than the first rotation speed.

9. The electric work vehicle according to claim 4 or 5, wherein
the motor restraining control is a control to raise the motor rotation speed at a predetermined acceleration or less.

10. The electric work vehicle according to any one of claims 4 to 9, wherein
the motor controlling section stops the motor restraining control in response to the at least one shift operation tool being restored.

11. The electric work vehicle according to any one of claims 4 to 9, wherein
the motor controlling section stops the motor restraining control in response to the at least one shift operation tool being restored and the motor rotation speed becoming 0 rotations.

12. An electric work vehicle, comprising:
a motor configured to drive at least either a travel device or a work device;
at least one shift operation tool configured to shift a rotational power for driving the travel device or the work device;
an accelerator operation tool configured to raise and lower a motor rotation speed of the motor; and
a motor controlling section configured to control the motor rotation speed in response to an operation on the accelerator operation tool,
the electric work vehicle being configured to perform predetermined notification while the motor is in operation.

13. The electric work vehicle according to claim 12, wherein
the notification is performed while the motor rotation speed is 0 rotations or equal to or less than a predetermined first rotation speed after the at least one shift operation tool is operated.

14. The electric work vehicle according to claim 13, wherein
the motor controlling section sets the motor rotation speed equal to or less than a predetermined second rotation speed larger than the first rotation speed, in response to the at least one shift operation tool being operated with the motor rotation speed being equal to or less than the first rotation speed, and
the notification is performed by rotary sound of the motor.

15. The electric work vehicle according to claim 12, wherein
the motor controlling section controls the motor rotation speed not to become larger than an idling rotation speed that is a predetermined rotation speed larger than 0 rounds while the motor is in operation, and
the notification is performed by rotary sound of the motor.

16. The electric work vehicle according to any one of claims 12 to 15, further comprising:
a notifier configured to perform the notification.

17. The electric work vehicle according to claim 16, wherein
the notifier is a speaker configured to emit beep sound, and
the notification is performed by the beep sound.

18. The electric work vehicle according to claim 16, wherein
the notifier is an alarm lamp, and
the notification is performed by lighting or flashing the alarm lamp.

19. The electric work vehicle according to any one of claims 1 to 18, further comprising:
a hydrostatic continuously variable transmission configured to shift the rotational power to be transmitted from the motor to the travel device, wherein
the at least one shift operation tool includes an HST operation tool configured to operate an angle of a cam plate of the hydrostatic continuously variable transmission.

20. The electric work vehicle according to any one of claims 1 to 19, wherein
the at least one shift operation tool includes a PTO operation tool configured to shift the rotational power to be transmitted from the motor to the work device.
